# EUROPEAN PATENT APPLICATION

(11) **EP 2 420 371 A1**
(43) Date of publication of application: **22.02.2012**
(21) Application number: 11460042.2
(22) Date of filing: 12.08.2011
(51) Int. Cl.: B29B 17/02

(54) **Method of recovery of rubber from used car tires and installation for its application**

(30) Priority: 17.08.2010 PL 39215110
(71) Applicant: Uniwersytet Technologiczni-Przyrodniczy Im. Jana I Jedrzeja Sniadeckich W Bydgoszcz, 85-225 Bydgoszcz (PL)
(72) Inventor: The designation of the inventor has not yet been filed
(74) Representative: Jankowski, Piotr

(57) **Abstract**

The subject of the invention is a method of rubber recovery from used car tires and installation of its application involving feeding water to the considered high pressure generating device and, next, after compression to approximately 150-300MPa, directing it to minimum one rotary head consisting of nozzles with diameter 0.2-0.6mm. from where it hits the tire surface in a constant or cyclical manner, thereby, separating rubber and textile parts from the bead wires; the installation consists of pump 3 and installation 4 for feeding water, and rotary head 2, container 7 equipped with a set of filters 6 and a technological installation of secondary circulation 5, and drive roller 8.

## Description

The subject of the invention is a method of recovery of rubber from used car tires and an installation of its application.

The description of invention no. 371170 provides information on the utilization method which involves supplying water from the considered high pressure generating device, under pressure 200-300MPa, to a nozzle with diameter equal to 0.2-0.5 cm, from where, at the speed of 900m/s, it hits the tire surface in a constant or cyclical manner, thereby, separating rubber and textile fractions from its metal bead wires.

The so far known, widely used mechanical methods of rubber recovery from used tires for obtainment rubber in the form of tiny crumbs with dimensions equal to a few hundred micrometers involve complicated technological processes consisting of successive operations grinding tire into tinier and tinier particles. The bead wires are ground together with the rubber which results in a necessity of carrying out additional operations to separate metal from rubber.

Besides, installations for mechanical recovery of tire rubber are characterized by: a complex technological system, relatively high energy consumption, a unit energy consumption index is approximately 215 kWh/Mg of tire, high emission of noise, difficulties connected with obtainment of rubber free from metal particles.

The aim of the invention is avoidance of disadvantages and inconveniences connected with mechanical recovery of tire rubber, implementing a method of the tire decomposition by means of, applied at high pressure, water jets with the use of nozzles installed in rotary heads.

The operation principle of the considered invention involves application of a high pressure water jet, to 300 MPa, from nozzles placed in rotary heads , at an angle to the heads axes so that there will occur a horizontal partial reaction of the water jet action and in effect the head rotary motion.

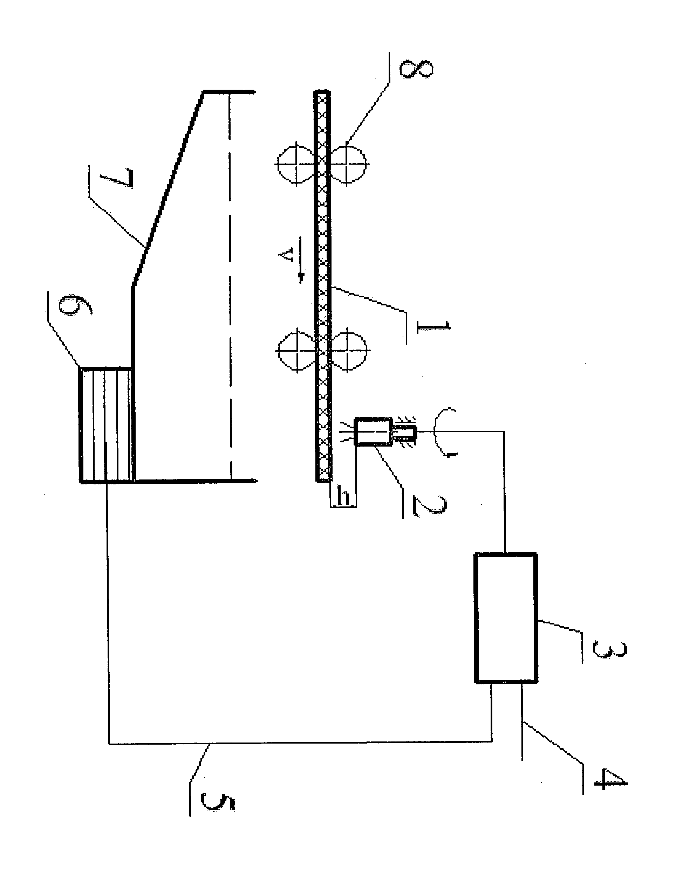

The installation for the method implementation according to the invention, has been presented schematically in the figure demonstrating an exemplary application.

The installation consists of high pressure pump (3), fed with water from conduit (4), from where water is fed, at 300 MPa, to rotary head (2), consisting of minimum two nozzles with diameter from 0.2-0.6 mm and next, after separation of the tire rubber and metal particles (1), the utilized elements drop, together with the technological water, to container (7) equipped with a set of filters (6). Through a technological installation of secondary circulation (5) water is fed again to the pump.

After cutting off side parts of the tire, it is severed and flattened and it moves through drive rollers 8, with velocity v, under head 2. The number of heads 2, velocity of travel v and height of head h over the tire are matched according to parameters of pump 3, type of tire and the assumed efficiency of the process.

Water jets flowing out of the nozzles and hitting the tire surface cause the rubber grinding and its separation from the bead wires. The mean dimension value of crumbs obtained in this way is 149 µm. They are free from metallic pollution as the tire bead wires are not cut by water jets and preserve their forms.

Unit energy consumption used for driving a high pressure pump feeding the spray nozzles is 185kWh/Mg of tire and is lower than for the mechanical recovery of tire rubber.

Closure of the water system in the installation for tire decomposition with the use of rotary heads with high pressure spray nozzles provides water consumption efficiency and environment-friendliness of the considered method of rubber recovery.

### Plenipotentiary

### Patent claims

The subject of the invention is a method of rubber recovery from used car tires and installation of its application involving feeding water to the considered high pressure generating device and, next, after compression to approximately 150-300MPa, directing it to minimum one rotary head consisting of nozzles with diameter 0.2-0.6mm. from where it hits the tire surface in a constant or cyclical manner, thereby, separating rubber and textile parts from the bead wires; the installation consists of pump 3 and installation 4 for feeding water, and rotary head 2, container 7 equipped with a set of filters 6 and a technological installation of secondary circulation 5, and drive roller 8.

## Claims

1. Method of tire utilization by a water jet involving feeding water to the considered high pressure generating device, and next after compression to about 150-300MPa directing it to a minimum one rotary head consisting of nozzles with diameter 0.2-0.6mm., from where it hits the tire surface in a constant or cyclical manner, separating rubber and textile particles from the bead wires.

2. The installation for the tire utilization method according to claim 1, **characterized by** consisting of pump 3 and installation 4 for feeding water and rotary header 2, container 7 equipped with a set of filters 6, and technological installation of secondary circulation 5, and drive rollers.
